# FASCICULE DE BREVET EUROPEEN

(11) **EP 2 021 610 B1**
(45) Date de publication et mention de la délivrance du brevet: **29.07.2009**
(21) Numéro de dépôt: 07731403.7
(22) Date de dépôt: 03.05.2007
(51) Int. Cl.: F02K 1/46, F02K 1/38

(54) **NACELLE DE TURBOREACTEUR EQUIPEE DE MOYENS DE REDUCTION DU BRUIT ENGENDRE PAR CE TURBOREACTEUR**
MIT MITTELN ZUR MINDERUNG DES DURCH DEN TURBOJET ERZEUGTEN LÄRMS AUSGESTATTETE TURBOJETGONDEL
TURBOJET NACELLE EQUIPPED WITH MEANS FOR REDUCING THE NOISE PRODUCED BY SAID TURBOJET

(30) Priorité: 18.05.2006 FR 0604433
(43) Date de publication de la demande: 11.02.2009
(73) Titulaire: Aircelle, 76700 Gonfreville L'Orcher (FR)
(72) Inventeur: VAUCHEL, Guy, Bernard, 76600 Le Havre (FR); PORTAL, Jean-Fabrice, Marcel, 76620 Le Havre (FR)
(74) Mandataire: Gaillarde, Frédéric F. Ch.
(86) Numéro de dépôt international: PCT/FR2007/000755
(87) Numéro de publication internationale: WO 2007/135257

(56) Documents cités:
- EP-A- 1 553 282
- EP-A- 1 580 417
- EP-A- 1 580 418
- EP-A2- 1 418 331
- GB-A- 2 372 729
- US-A1- 2004 237 501

## Description

La présente invention se rapporte notamment à une nacelle de turboréacteur équipée de moyens de réduction du bruit engendré par ce turboréacteur.

Un aéronef est propulsé par un ou plusieurs ensembles propulsifs comprenant un turboréacteur logeant dans une nacelle tubulaire. Chaque ensemble propulsif est rattaché à l'avion par un mât situé généralement sous une aile ou au niveau du fuselage.

De façon classique, une nacelle présente une structure comprenant une entrée d'air en amont du moteur, une section médiane destinée à entourer une soufflante du turboréacteur, et une section aval entourant la chambre de combustion du turboréacteur. Une tuyère primaire peut alors être fixée en sortie du turboréacteur.

Selon les besoins, la section aval de la nacelle peut abriter un dispositif d'inversion de poussée dont le rôle est, lors de l'atterrissage de l'aéronef, d'améliorer la capacité de freinage de celui-ci en redirigeant vers l'amont au moins une partie de la poussée générée par le turboréacteur.

Les nacelles modernes sont destinées à abriter des turboréacteurs double flux aptes à générer, par l'intermédiaire des pâles de la soufflante en rotation, un flux d'air chaud (également appelé flux primaire) issu de la chambre de combustion du turboréacteur, et un flux d'air froid (flux secondaire) circulant à l'extérieur du turboréacteur à travers un canal intérieur d'écoulement, également appelé veine, formé entre une structure interne aval et structure externe aval de la nacelle. Les deux flux d'air sont éjectés du turboréacteur par l'aval de la nacelle.

Pour ces nacelles récentes, le dispositif d'inversion de poussée obstrue la veine du flux froid et dirige ce dernier vers l'avant de la nacelle, générant de ce fait une contre-poussée qui vient s'ajouter au freinage des roues de l'aéronef.

Les moyens mis en oeuvre pour réaliser cette réorientation du flux froid varient suivant le type d'inverseur. Cependant, dans tous les cas, la structure d'un inverseur comprend des capots mobiles déplaçables entre, d'une part, une position déployée dans laquelle ils ouvrent dans la nacelle un passage destiné au flux dévié, et d'autre part, une position d'escamotage dans laquelle ils ferment ce passage. Ces capots peuvent remplir une fonction de déviation ou simplement d'activation d'autres moyens de déviation.

Dans le cas d'un inverseur à grilles, également connu sous le nom d'inverseur à cascade, la réorientation du flux d'air est effectuée par des grilles de déviation, le capot n'ayant qu'une simple fonction de coulissage visant à découvrir ou recouvrir ces grilles. Des portes de blocage complémentaires, activées par le coulissement du capotage, permettent généralement une fermeture de la veine en aval des grilles de manière à optimiser la réorientation du flux froid.

Par ailleurs, une tuyère commune d'éjection peut-être disposée en aval du dispositif d'inversion de poussée équipant une nacelle à flux mélangés.

La géométrie de la section aval de la nacelle, que celle-ci soit ou non équipée d'un dispositif d'inversion de poussée, est généralement de révolution et continue suivant un plan pratiquement perpendiculaire à l'axe longitudinal de la nacelle. Des éléments de carénage supportés par le moteur en aval de sa constitution terminent la définition aérodynamique de la nacelle.

Dans tous les cas, la rencontre brusque de l'air expulsé par la nacelle avec l'air extérieur environnant génère un bruit très important.

Il a par exemple été proposé, notamment dans le brevet US 2003/0213227, de réduire ces nuisances sonores en pratiquant une découpe en feston en sortie de la section aval de la nacelle. Cette découpe est couramment appelée « chevron », et les chevrons, qui peuvent être de formes variées, participent à une meilleure homogénéisation de l'air expulsé avec le vent externe de la nacelle. Cette définition permet un mélange plus progressif entre les deux flux, abaissant le niveau sonore rencontré habituellement dans les configurations conventionnelles.

Une fois la configuration géométrique figée, la forme des chevrons ne peut être modifiée en exploitation. La forme en triangle souvent proposée offre des extrémités fragiles aux impacts ou en déformées, notamment lors de manoeuvres d'engin autour de la nacelle, un choc sans dégât apparent pouvant perturber la section de sortie et réduire l'efficacité du dispositif. La maintenance s'en trouve de même plus délicate à assurer lors d'une réparation ou d'un changement d'une partie de chevron pour les mêmes raisons de réglage de section d'éjection à garantir.

De plus, l'aval de la nacelle est habituellement traité pour résister à l'accrochage d'un arc de foudre par l'adjonction d'un renforcement métallique souvent rapporté. Or, la présence de chevrons rend l'opération de renforcement plus délicate à réaliser.

Il a par ailleurs été proposé, notamment dans les documents EP 1 580 417, EP 1 580 418, US2004/237501, de fournir une nacelle pour turboréacteur d'un aéronef, comprenant une structure interne aval et une structure externe aval délimitant un canal intérieur d'écoulement d'un flux secondaire engendré par le turboréacteur, la structure externe aval comportant au moins un circuit de distribution débouchant en sortie du turboréacteur et étant destiné à être raccordé à une source d'alimentation en fluide de réduction sonore disposée en amont de la structure externe aval.

Le document EP 1 580 417 décrit une nacelle ayant les caractéristiques du préambule de la revendication 1.

Comme cela est connu en soi, la sortie du fluide de réduction sonore permet de produire un écran aérodynamique remplissant la même fonction que les chevrons fixes, c'est-à-dire permettant de rendre progressif le mélange de l'air sortant du canal intérieur de la nacelle avec l'air extérieur environnant. Cette progressivité permet une réduction du bruit engendré par le fonctionnement du turboréacteur.

La présente invention a notamment pour but d'adapter un tel dispositif de réduction sonore à une nacelle munie d'un inverseur de poussée.

On atteint ce but de l'invention avec une nacelle pour turboréacteur d'un aéronef, comprenant une structure interne aval et une structure externe aval délimitant un canal intérieur d'écoulement d'un flux secondaire engendré par le turboréacteur, la structure externe aval comportant au moins un circuit de distribution débouchant en sortie du turboréacteur et étant destiné à être raccordé à une source d'alimentation en fluide de réduction sonore disposée en amont de la structure externe aval,
cette nacelle étant remarquable en ce que la structure externe aval est équipée d'un dispositif d'inversion de poussée apte à passer alternativement d'une position de fermeture, dans laquelle il permet la circulation dudit flux dans le canal intérieur en jet direct, à une position d'ouverture, dans laquelle il découvre une ouverture dans la structure externe aval de manière à permettre une réorientation dudit flux selon un jet dévié par l'activation de moyens d'inversion de poussée,
et en ce que ledit circuit de distribution comprend au moins un conduit d'alimentation apte à assurer le passage dudit fluide de ladite source d'alimentation vers la sortie du turboréacteur au moins lorsque ledit dispositif d'inversion est dans sa position de fermeture.

Grâce à la présence d'un tel conduit d'alimentation, le dispositif de réduction de bruit par émission d'un fluide de réduction sonore est compatible avec une nacelle équipée d'un inverseur de poussée.

Suivant d'autres caractéristiques optionnelles de cette nacelle :
- ledit conduit d'alimentation est apte à relier la source d'alimentation à au moins un conduit de distribution ;
- le conduit de distribution est de configuration torique ;
- un diffuseur au moins est relié à chaque conduit de distribution en aval ;
- chaque diffuseur possède une forme adaptée aux lignes resserrées de l'aval de ladite nacelle ;
- chaque diffuseur est en forme d'entonnoir à cavité libre ou pourvu d'aménagements internes constituant des déflecteurs ;
- chaque diffuseur comprend une pluralité de tubulures pouvant différer les unes des autres en termes de diamètre, d'acheminement, et d'orientation ;
- chaque diffuseur est accouplé à un système de commande et de régulation autonome apte à réguler le débit de fluide traversant ledit diffuseur ;
- chaque diffuseur présente une extrémité aval sur laquelle est rapportée un becquet permettant d'orienter le flux sortant du diffuseur vers l'intrados ou vers l'extrados ;
- le conduit d'alimentation se décompose en au moins deux conduits télescopiques aptes à faire passer alternativement le dispositif d'inversion de poussée de sa position de fermeture à sa position d'ouverture ;
- des moyens sont prévus pour assurer l'étanchéité entre les deux conduits télescopiques au moins lorsque le dispositif d'inversion de poussée est dans sa position de fermeture ;
- le conduit d'alimentation comprend une extrémité amont équipée de moyens de couplage aptes à permettre un contact franc avec une interface reliée directement ou indirectement à la source d'alimentation.

La présente invention se rapporte également à Installation comprenant une nacelle conforme à ce qui précède, remarquable en ce qu'elle comporte une source d'alimentation en fluide reliée à chaque conduit d'alimentation.

Suivant d'autres caractéristiques optionnelles de cette installation :
- cette nacelle comprend au moins un dispositif de commande et de régulation permettant de réguler le débit de fluide délivré par ladite source d'alimentation dans chaque conduit d'alimentation ;
- chaque dispositif de commande et de régulation contient des moyens de refroidissement aptes à refroidir le fluide délivré par la source d'alimentation.

La présente invention se rapporte également à un aéronef comprenant au moins une installation conforme à ce qui précède, remarquable en ce que la source d'alimentation est constituée par le moteur du turboréacteur.

Suivant d'autres caractéristiques optionnelles de cet aéronef :
- le moteur est en communication avec le circuit de distribution par l'intermédiaire d'au moins un bras d'alimentation ;
- la source d'alimentation se trouve à bord dudit aéronef.

L'invention sera mieux comprise à l'aide de la description détaillée qui est exposée ci-dessous en regard du dessin annexé dans lequel :
La figure 1 est une vue schématique partielle en perspective d'une nacelle traditionnelle à chevrons rattachée à une aile d'aéronef ;
La figure 2 est une vue similaire à celle de la figure 1 d'une nacelle selon l'invention ;
La figure 3 est une vue schématique partielle en coupe longitudinale du moteur constituant la source d'alimentation en air ;
La figure 4 est une vue schématique en coupe longitudinale d'une nacelle selon l'invention équipée d'une structure externe aval fixe ;
La figure 5 est une vue de dessus schématique partielle d'une section longitudinale d'une première variante de réalisation d'un diffuseur ;
La figure 6 est une vue similaire à celle de la figure 5 d'une deuxième variante de réalisation d'un diffuseur ;
La figure 7 est une vue schématique partielle agrandie en coupe selon la ligne VII-VII de la nacelle représentée à la figure 4 ;
Les figures 8 et 9 sont deux vues schématiques agrandies d'un becquet disposé en bout d'un diffuseur de la nacelle représentée à la figure 4 ;
La figure 10 est une vue schématique en coupe longitudinale d'une nacelle selon l'invention présentant une structure externe aval équipée d'un dispositif d'inversion de poussée à conduits télescopiques en position de fermeture ;
La figure 11 est une vue similaire à celle de la figure 10, lorsque le dispositif d'inversion de poussée est en position d'ouverture ;
La figure 12 est une vue schématique en coupe longitudinale d'un mode d'interfaçage du conduit d'alimentation à la source d'alimentation d'une autre nacelle selon l'invention équipée d'un dispositif d'inversion de poussée ;
La figure 13 est une vue de détail d'un autre mode d'interfaçage du conduit d'alimentation à la source d'alimentation ;
La figure 14 est une vue schématique partielle en coupe longitudinale d'une tuyère primaire selon l'invention.

Dans la description détaillée qui va suivre des figures définies ci-dessus, les mêmes éléments ou les éléments remplissant des fonctions identiques conserveront généralement les mêmes références.

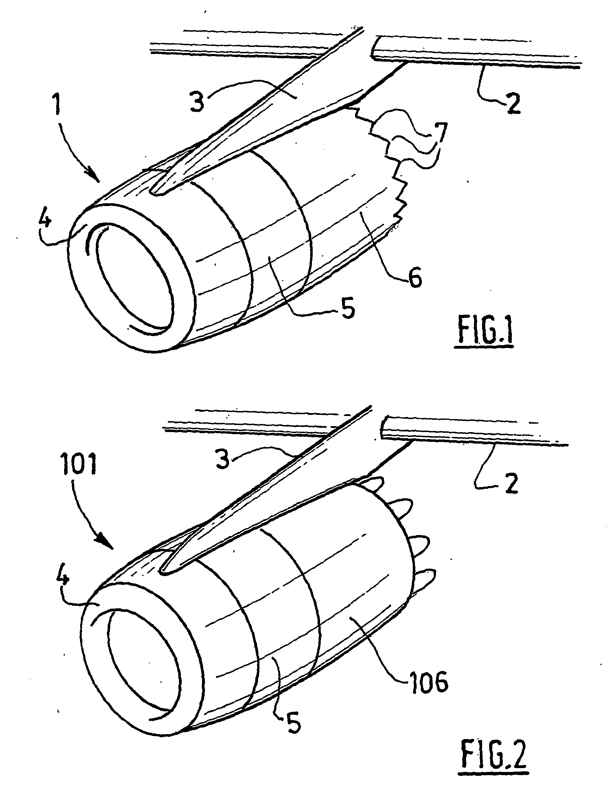

Une nacelle 1 traditionnelle, telle que représentée à la figure 1, est rattachée à une aile 2 d'un aéronef par l'intermédiaire d'un mât 3. De façon classique, cette nacelle 1 présente une structure comprenant une entrée d'air 4 en amont du moteur, une section médiane 5 destinée à entourer une soufflante du turboréacteur, et une section aval 6 entourant la chambre de combustion du turboréacteur. Afin de réduire les nuisances sonores découlant de la rencontre brusque de l'air expulsé avec l'air extérieur environnant, une découpe en feston est pratiquée en sortie de la section aval 6 de la nacelle 1. Cette découpe est couramment appelée « chevron », et les chevrons 7, qui peuvent être de formes variées, participent à une meilleure homogénéisation de l'air expulsé avec le vent externe de la nacelle 1.

La figure 2 est une vue similaire à celle de la figure 1 d'une nacelle 101 selon l'invention. Cette nacelle 101, à la différence de la nacelle 1, possède une section aval 106 dépourvue de chevrons 7. Cependant, l'objet de l'invention permet bien de réaliser un « chevron fluidique » produisant un écran aérodynamique remplissant la même fonction que les chevrons 7.

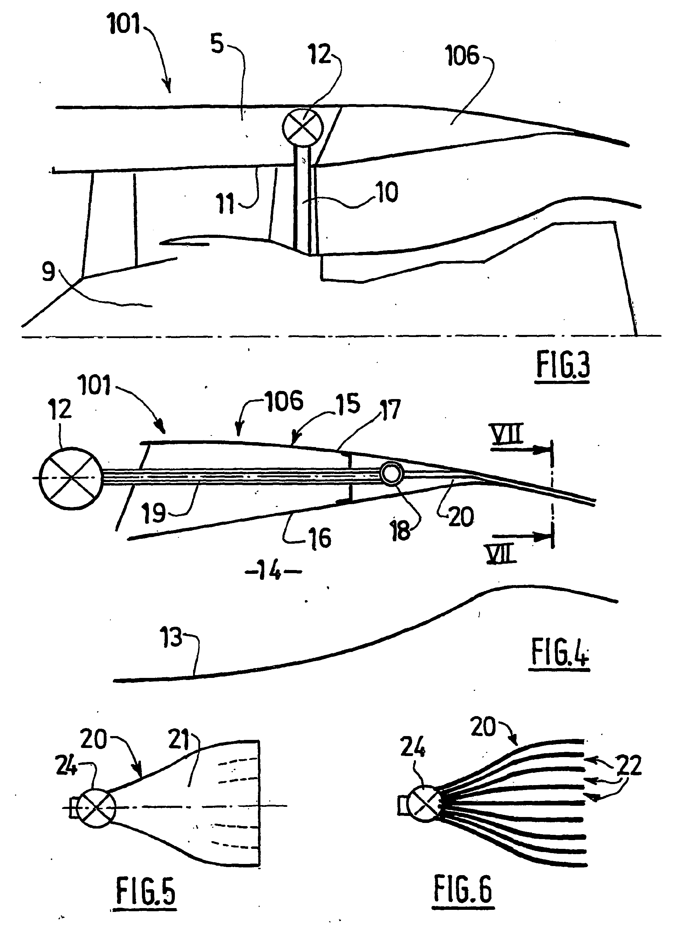

Pour cela, comme représenté à la figure 3, il est prévu de prélever de l'air du moteur 9 par l'intermédiaire d'au moins un bras 10 de tenue structurale du carter interne 11 de la section médiane 5 entourant la soufflante, ce bras 10 présentant, d'une part, une première extrémité fixée dans le moteur 9, et d'autre part, une seconde extrémité rattachée à la section médiane 5 et reliée à un dispositif de commande et de régulation 12 disposé en amont de la section aval 106 de la nacelle 101. Par conséquent, le moteur 9 constitue dans cet exemple la source d'alimentation en air nécessaire au fonctionnement du procédé d'homogénéisation. Néanmoins, en alternative, cette alimentation en air, ou plus généralement en fluide, pourra venir de l'aéronef lui-même via le mât 3 par tout moyen existant ou rapporté capable de produire la puissance nécessaire à cette fonction comme un compresseur ou un moteur auxiliaire (non représentés).

En se référant à la figure 4, on observe que la section aval 106 comprend une structure interne aval 13 formant la surface aérodynamique interne d'un conduit intérieur 14 dans lequel circule le flux sortant de la soufflante, et une structure externe aval 15 se décomposant, d'une part, en une paroi interne 16 formant la surface aérodynamique externe du conduit intérieur 14, et d'autre part, en une paroi externe de carénage 17 formant une surface aérodynamique externe.

Plus précisément, le dispositif de commande et de régulation 12 est mis en communication avec un conduit de distribution 18 grâce à un conduit d'alimentation 19 situé sensiblement dans l'axe du moteur 9. Plus précisément encore, le conduit de distribution 18 et le conduit d'alimentation 19 sont disposés entre la paroi interne 16 et la paroi externe de carénage 17 de la structure externe aval 15. Le conduit de distribution 18 est de configuration torique et est apte à distribuer l'air provenant du moteur 9 sur toute la périphérie aval de la structure externe aval 15. A titre indicatif, dans une application à un dispositif d'inversion de poussée à portes (non représentée), le conduit de distribution 18 sera placé en aval des portes.

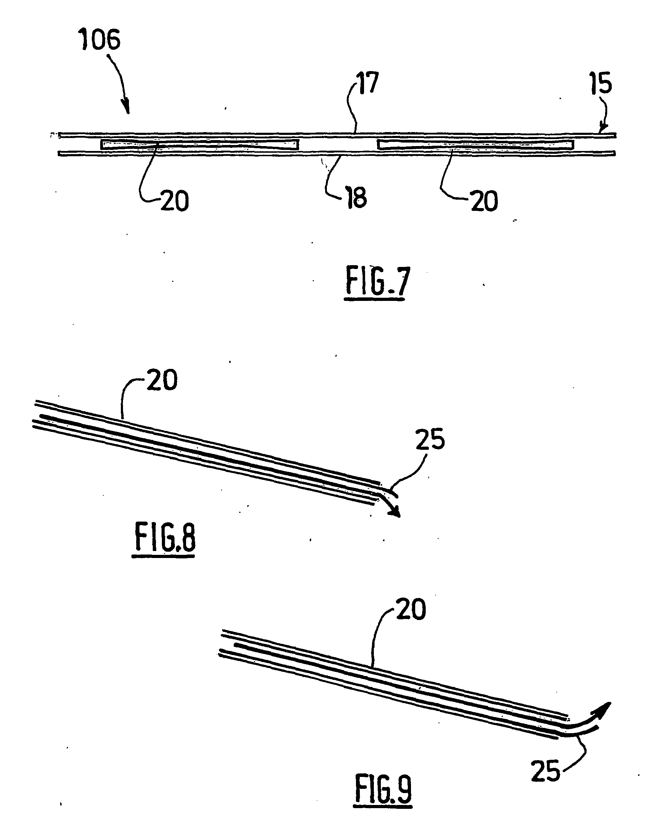

Répartis en aval, des diffuseurs 20 sont reliés au conduit de distribution 18 et sont conçus de manière à posséder une forme adaptée aux lignes resserrées de l'aval de la nacelle 101, comme cela peut notamment se déduire de la figure 7. La constitution d'un diffuseur 20 peut varier en termes de formes et d'options en fonction de la géométrie du chevron fluidique recherché en sortie du turboréacteur.

En effet, comme représenté à la figure 5, chaque diffuseur 20 peut être en forme d'entonnoir à cavité libre 21, c'est-à-dire sans accident interne à sa structure. Il peut néanmoins intégrer des aménagements internes à sa structure comme par exemple des déflecteurs, des sections évolutives, des chicanes, pris séparément ou en combinaison.

En variante, et comme représenté à la figure 6, chaque diffuseur 20 peut être réalisé en une pluralité de tubulures 22, elles-mêmes réalisées selon différentes variantes de diamètre, de cheminement et d'orientation.

Par ailleurs, un système de commande et de régulation 24 autonome est associé à chaque diffuseur 20 afin de laisser la possibilité de réguler le débit d'air provenant du conduit de distribution 18. Cette possibilité offerte permet d'améliorer encore les performances des chevrons fluidiques en fonction des phases de vol de l'aéronef.

Comme représenté aux figures 8 et 9, une option supplémentaire est proposée dans la gestion du mélange des flux par l'adjonction, en extrémité aval de chaque diffuseur 20, d'un becquet 25 introduit dans ledit diffuseur 20 sur une partie ou sur la totalité de la longueur de celui-ci. Un tel becquet 25 permet d'orienter le flux sortant du diffuseur 20 selon la direction désirée, à savoir vers l'intrados ou l'extrados, le choix étant laissé à l'homme du métier. Il doit être noté que chaque becquet 25 peut également être fixé dans la bordure aval de la structure externe aval 15, tout en demeurant dans le prolongement de son diffuseur 20 respectif.

Par ailleurs, il doit être bien compris qu'une configuration similaire peut s'appliquer à une tuyère commune (non représentée) en aval de la structure externe aval 15 dans le cas d'une nacelle à flux mélangés.

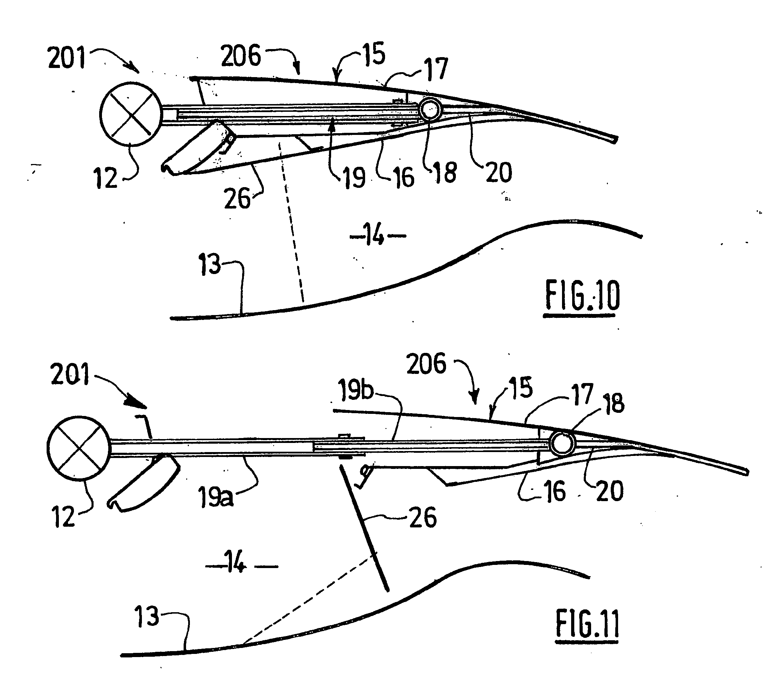

Les figures 10 et 11 montrent un exemple d'application de l'invention à une nacelle 201 comprenant une section aval 206 présentant une structure externe aval 15 constitutive d'un dispositif d'inversion de poussée permettant, de façon conventionnelle, de réorienter le flux circulant dans le conduit intérieur 14 à l'aide de grilles de déviation 26 dont le déploiement et le repliement découlent respectivement de la mise translation vers l'amont ou vers l'aval de la structure externe aval 15.

Dans cet exemple, chaque conduit d'alimentation 19 se décompose en deux conduits 19a, 19b télescopiques remplissant une double fonction, à savoir, d'une part, conduire l'air délivré par le dispositif de commande et de régulation 12 vers le conduit de distribution 18, et d'autre part, provoquer la mise en translation de la structure externe aval 15 au moment opportun. Bien évidemment, une interface peut être prévue afin d'assurer une étanchéité continue ou ponctuelle entre les deux conduits 19a, 19b, et ceci dans toutes les positions rétractée et étendue.

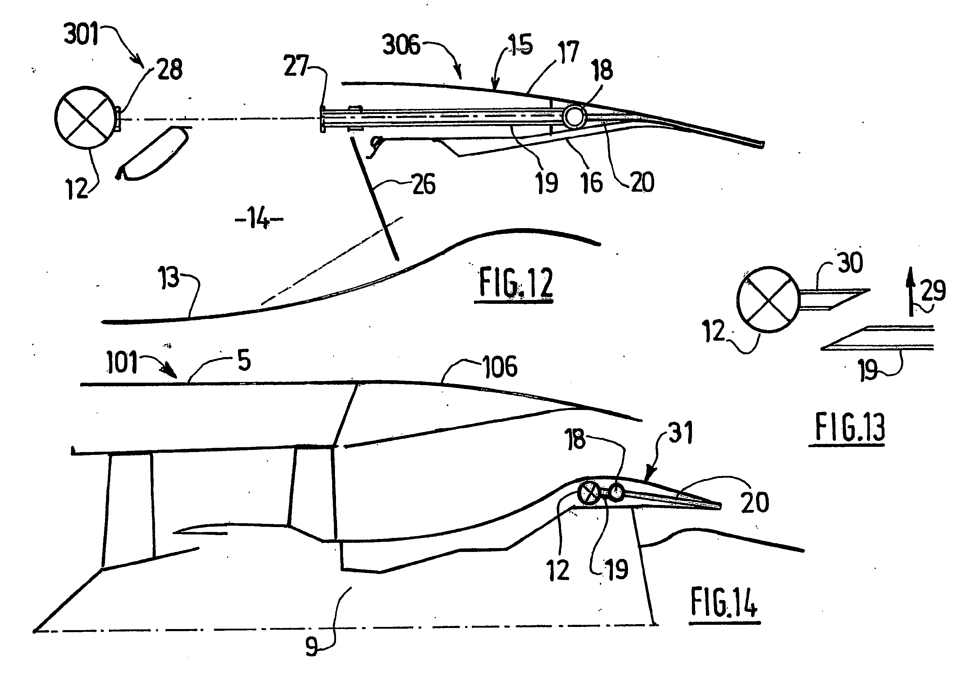

A la figure 12 est représentée une nacelle 301 pourvue d'une section aval 306 inadaptée à délivrer des chevrons fluidiques durant la phase d'inversion de poussée. La fonction d'homogénéisation de l'air ne peut alors être assurée que lors de la phase de jet direct, durant laquelle les grilles de déviation 26 sont repliées. Pour cela, il est prévu d'équiper l'extrémité amont 27 du conduit d'alimentation 19 et la sortie 28 du dispositif de commande et de régulation 12 de moyens d'étanchéité permettant à ladite extrémité amont 27 de ne venir en contact franc avec la sortie 28 que lorsque la structure externe aval 15 est en position de jet direct.

Néanmoins, l'interfaçage étanche peut être réalisé à n'importe quel emplacement entre le dispositif de commande et de régulation 12 et le conduit de distribution 18.

Par exemple, comme représenté à la figure 13, et plus particulièrement dans le cadre d'une nacelle équipée d'un dispositif d'inversion à portes (non représentée), l'interface d'alimentation peut se faire en partie latérale suivant le flèche 29, le dispositif de commande et de régulation 12 étant doté en sortie d'une tubulure 30 possédant une section correspondant parfaitement à celle du conduit d'alimentation 19. Cette interface peut se situer à n'importe quel emplacement angulaire de la nacelle jugé utile pour une meilleure cinématique de manoeuvre des éléments de structure. De plus, dans une telle configuration, l'alimentation des diffuseurs 20 en air est avantageusement ménagée dans les poutres centrales de la structure externe aval fixe de la nacelle afin de permettre l'accès au moteur 9 par l'ouverture conventionnelle de chaque demi structure autour du mât 3 de l'aéronef.

Enfin, l'application du procédé d'homogénéisation selon l'invention à une tuyère primaire 31 est représentée à la figure 14. La disposition et la configuration des éléments d'amenée d'air sont dans la même logique que pour l'application dudit procédé à la structure externe aval 15 de la nacelle 101.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Nacelle (201, 301) pour turboréacteur d'un aéronef, comprenant une structure interne aval (13) et une structure externe aval (15) délimitant un canal intérieur (14) d'écoulement d'un flux secondaire engendré par le turboréacteur, la structure externe aval comportant au moins un circuit de distribution (18, 19, 20) débouchant en sortie du turboréacteur et étant destiné à être raccordé à une source d'alimentation (9) en fluide de réduction sonore disposée en amont de la structure externe aval,
**caractérisée en ce que** la structure externe aval (15) est équipée d'un dispositif d'inversion de poussée apte à passer alternativement d'une position de fermeture, dans laquelle il permet la circulation dudit flux dans le canal intérieur (14) en jet direct, à une position d'ouverture, dans laquelle il découvre une ouverture dans la structure externe aval de manière à permettre une réorientation dudit flux selon un jet dévié par l'activation de moyens d'inversion de poussée,
et **en ce que** ledit circuit de distribution comprend au moins un conduit d'alimentation (19) apte à assurer le passage dudit fluide de ladite source d'alimentation (9) vers la sortie du turboréacteur au moins lorsque ledit dispositif d'inversion est dans sa position de fermeture.

2. Nacelle (201, 301) selon la revendication 1, **caractérisée en ce que** ledit conduit d'alimentation (19) est apte à relier la source d'alimentation (9) à au moins un conduit de distribution (18).

3. Nacelle (201, 301) selon la revendication 2, **caractérisée en ce que** le conduit de distribution (18) est de configuration torique.

4. Nacelle (201, 301) selon l'une quelconque des revendications 2 ou 3, **caractérisée en ce qu'**un diffuseur (20) au moins est relié à chaque conduit de distribution (18) en aval.

5. Nacelle (201, 301) selon la revendication 4, **caractérisée en ce que** chaque diffuseur (20) possède une forme adaptée aux lignes resserrées de l'aval de ladite nacelle.

6. Nacelle (201, 301) selon l'une des revendications 4 ou 5, **caractérisée en ce que** chaque diffuseur (20) est en forme d'entonnoir à cavité libre (21) ou pourvu d'aménagements internes constituant des déflecteurs.

7. Nacelle (201, 301) selon l'une des revendications 4 ou 5, **caractérisée en ce que** chaque diffuseur (20) comprend une pluralité de tubulures (22) pouvant différer les unes des autres en termes de diamètre, d'acheminement, et d'orientation.

8. Nacelle (201, 301) selon l'une quelconque des revendications 4 à 7, **caractérisée en ce que** chaque diffuseur (20) est accouplé à un système de commande et de régulation (24) autonome apte à réguler le débit de fluide traversant ledit diffuseur.

9. Nacelle selon l'une quelconque des revendications 4 à 8, **caractérisée en ce que** chaque diffuseur (20) présente une extrémité aval sur laquelle est rapportée un becquet (25) permettant d'orienter le flux sortant du diffuseur vers l'intrados ou vers l'extrados.

10. Nacelle (201) selon l'une quelconque des revendications précédentes, **caractérisée en ce que** le conduit d'alimentation (19) se décompose en au moins deux conduits (19a, 19b) télescopiques aptes à faire passer alternativement le dispositif d'inversion de poussée de sa position de fermeture à sa position d'ouverture.

11. Nacelle (201) selon la revendication 10, **caractérisée en ce que** des moyens sont prévus pour assurer l'étanchéité entre les deux conduits (19a, 19b) télescopiques au moins lorsque le dispositif d'inversion de poussée est dans sa position de fermeture.

12. Nacelle (301) selon l'une quelconque des revendications 1 à 9, **caractérisée en ce que** le conduit d'alimentation (19) comprend une extrémité amont (27) équipée de moyens de couplage aptes à permettre un contact franc avec une interface (28) reliée directement ou indirectement à la source d'alimentation (9).

13. Installation comprenant une nacelle (201, 301) selon l'une quelconque des revendications précédentes, **caractérisée en ce qu'**elle comporte une source d'alimentation (9) en fluide reliée à chaque conduit d'alimentation (19).

14. Installation selon la revendication 13, **caractérisée en ce qu'**elle comprend au moins un dispositif de commande et de régulation (12) permettant de réguler le débit de fluide délivré par ladite source d'alimentation (9) dans chaque conduit d'alimentation (19).

15. Installation selon la revendication 14, **caractérisée en ce que** chaque dispositif de commande et de régulation (12) contient des moyens de refroidissement aptes à refroidir le fluide délivré par la source d'alimentation (9).

16. Aéronef comprenant au moins une installation selon l'une quelconque des revendications 13 à 15, **caractérisé en ce que** la source d'alimentation est constituée par le moteur (9) du turboréacteur.

17. Aéronef selon la revendication 16, **caractérisé en ce que** le moteur (9) est en communication avec le circuit de distribution (18, 19, 20) par l'intermédiaire d'au moins un bras (10) d'alimentation.

18. Aéronef comprenant au moins une installation selon l'une quelconque des revendications 13 à 15, **caractérisé en ce que** la source d'alimentation se trouve à bord dudit aéronef.

## Claims

1. Nacelle (201, 301) for an aircraft turbojet engine, comprising a downstream internal structure (13) and a downstream external structure (15) delimiting an internal duct (14) through which a secondary or bypass stream generated by the turbojet engine flows, the downstream external structure comprising at least one distribution circuit (18, 19, 20) opening to the outlet of the turbojet engine and intended to be connected to a source (9) supplying noise-reduction fluid positioned upstream of the downstream external structure,
**characterized in that** the downstream external structure (15) is equipped with a thrust reverser device capable alternately of switching from a closed position, in which it allows said stream to flow through the internal duct (14) as a direct jet, to an open position in which it uncovers an opening in the downstream external structure so as to allow said stream to be reoriented into a deflected jet through activation of thrust reverser means,
and **in that** said distribution circuit comprises at least one supply pipe (19) capable of conveying said fluid from said supply source (9) to the turbojet engine outlet at least when said reverser device is in its closed position.

2. Nacelle (201, 301) according to Claim 1, **characterized in that** said supply pipe (19) is able to connect the supply source (9) to at least one distribution pipe (18).

3. Nacelle (201, 301) according to Claim 2, **characterized in that** the distribution pipe (18) is of toric configuration.

4. Nacelle (201, 301) according to either one of Claims 2 and 3, **characterized in that** at least one diffuser (20) is connected to each distribution pipe (18), downstream.

5. Nacelle (201, 301) according to Claim 4, **characterized in that** each diffuser (20) has a shape tailored to suit the tapering lines of the downstream end of said nacelle.

6. Nacelle (201, 301) according to either of Claims 4 and 5, **characterized in that** each diffuser (20) is funnel-shaped with its cavity (21) unencumbered or provided with internal arrangements that form deflectors.

7. Nacelle (201, 301) according to either of Claims 4 and 5, **characterized in that** each diffuser (20) comprises a plurality of tubings (22) that may differ from one another in terms of their diameter, routing and orientation.

8. Nacelle (201, 301) according to any one of Claims 4 to 7, **characterized in that** each diffuser (20) is coupled to an autonomous command and control system (24) capable of regulating the rate of flow of fluid passing through said diffuser.

9. Nacelle according to any one of Claims 4 to 8, **characterized in that** each diffuser (20) has a downstream end to which there is attached a spoiler (25) so that the stream leaving the diffuser can be oriented toward the intrados or toward the extrados.

10. Nacelle (201) according to any one of the preceding claims, **characterized in that** the supply pipe (19) is split into at least two telescopic pipes (19a, 19b) capable alternately of switching the thrust reverser device from its closed position to its open position.

11. Nacelle (201) according to Claim 10, **characterized in that** there are means for providing sealing between the two telescopic pipes (19a, 19b) at least when the thrust reverser device is in its closed position.

12. Nacelle (301) according to any one of Claims 1 to 9, **characterized in that** the supply pipe (19) comprises an upstream end (27) equipped with coupling means capable of allowing clean contact with an interface (28) connected directly or indirectly to the supply source (9).

13. Installation comprising a nacelle (201, 301) according to any one of the preceding claims, **characterized in that** it comprises a fluid supply source (9) connected to each supply pipe (19).

14. Installation according to Claim 13, **characterized in that** it comprises at least one command and control device (12) for regulating the rate of flow of fluid delivered by said supply source (9) to each supply pipe (19).

15. Installation according to Claim 14, **characterized in that** each command and control device (12) contains cooling means capable of cooling the fluid delivered by the supply source (9).

16. Aircraft comprising at least one installation according to any one of Claims 13 to 15, **characterized in that** the supply source consists of the turbojet engine (9).

17. Aircraft according to Claim 16, **characterized in that** the engine (9) is in communication with the distribution circuit (18, 19, 20) via at least one supply strut (10).

18. Aircraft comprising at least one installation according to any one of Claims 13 to 15, **characterized in that** the supply source is situated onboard said aircraft.

## Patentansprüche

1. Gondel (201, 301) für ein Turbostrahltriebwerk eines Luftfahrzeugs, die eine stromabwärts liegende innere Struktur (13) und eine stromabwärts liegende äußere Struktur (15) enthält, welche einen inneren Kanal (14) für die Strömung eines vom Turbostrahltriebwerk erzeugten Sekundärstroms begrenzen, wobei die stromabwärts liegende äußere Struktur mindestens einen Verteilerkreis (18, 19, 20) aufweist, der am Ausgang des Turbostrahltriebwerks mündet und dazu bestimmt ist, an eine Quelle (9) zur Versorgung mit Lärmminderungsfluid angeschlossen zu werden, die stromaufwärts vor der stromabwärts liegenden äußeren Struktur angeordnet ist,
**dadurch gekennzeichnet, dass** die stromabwärts liegende äußere Struktur (15) mit einer Schubumkehrvorrichtung ausgestattet ist, die abwechselnd von einer Schließstellung, in der sie die Zirkulation des Stroms im inneren Kanal (14) in direktem Strahl erlaubt, in eine Öffnungsstellung übergehen kann, in der sie eine Öffnung in der stromabwärts liegenden äußeren Struktur freigibt, um eine Neuausrichtung des Stroms gemäß einem abgelenkten Strahl durch Aktivierung von Schubumkehreinrichtungen erlaubt,
und dass der Verteilerkreis mindestens eine Versorgungsleitung (19) enthält, die den Durchgang des Fluids von der Versorgungsquelle (9) zum Ausgang des Turbostrahltriebwerks zumindest dann gewährleisten kann, wenn die Umkehrvorrichtung in ihrer Schließstellung ist.

2. Gondel (201, 301) nach Anspruch 1, **dadurch gekennzeichnet, dass** die Versorgungsleitung (19) die Versorgungsquelle (9) mit mindestens einer Verteilerleitung (18) verbinden kann.

3. Gondel (201, 301) nach Anspruch 2, **dadurch gekennzeichnet, dass** die Verteilerleitung (18) eine torusförmige Konfiguration hat.

4. Gondel (201, 301) nach einem der Ansprüche 2 oder 3, **dadurch gekennzeichnet, dass** mindestens ein Diffusor (20) stromabwärts mit jeder Verteilerleitung (18) verbunden ist.

5. Gondel (201, 301) nach Anspruch 4, **dadurch gekennzeichnet, dass** jeder Diffusor (20) eine an die verengten Linien der stromabwärts liegenden Seite der Gondel angepasste Form hat.

6. Gondel (201, 301) nach einem der Ansprüche 4 oder 5, **dadurch gekennzeichnet, dass** jeder Diffusor (20) die Form eines Trichters mit freiem Hohlraum (21) hat oder mit inneren Einrichtungen versehen ist, die Deflektoren bilden.

7. Gondel (201, 301) nach einem der Ansprüche 4 oder 5, **dadurch gekennzeichnet, dass** jeder Diffusor (20) mehrere Rohrleitungen (22) aufweist, die sich voneinander in Durchmesser, Beförderung und Ausrichtung unterscheiden können.

8. Gondel (201, 301) nach einem der Ansprüche 4 bis 7, **dadurch gekennzeichnet, dass** jeder Diffusor (20) mit einem autonomen Steuer- und Regelsystem (24) gekoppelt ist, das den den Diffusor durchquerenden Fluiddurchsatz regeln kann.

9. Gondel nach einem der Ansprüche 4 bis 8, **dadurch gekennzeichnet, dass** jeder Diffusor (20) ein stromabwärts liegendes Ende hat, auf das ein Spoiler (25) aufgesetzt ist, der es ermöglicht, den aus dem Diffusor austretenden Strom zur Unterseite oder zur Oberseite zu richten.

10. Gondel (201) nach einem der vorhergehenden Ansprüche, **dadurch gekennzeichnet, dass** die Versorgungsleitung (19) in mindestens zwei Teleskopleitungen (19a, 19b) aufgeteilt ist, die die Schubumkehrvorrichtung abwechselnd von ihrer Schließstellung in ihre Öffnungsstellung übergehen lassen können.

11. Gondel (201) nach Anspruch 10, **dadurch gekennzeichnet, dass** Einrichtungen vorgesehen sind, um die Dichtheit zwischen den zwei Teleskopleitungen (19a, 19b) zumindest dann zu gewährleisten, wenn die Schubumkehrvorrichtung in ihrer Schließstellung ist.

12. Gondel (301) nach einem der Ansprüche 1 bis 9, **dadurch gekennzeichnet, dass** die Versorgungsleitung (19) ein stromaufwärts liegendes Ende (27) aufweist, das mit Koppeleinrichtungen ausgestattet ist, die einen freien Kontakt mit einer Schnittstelle (28) erlauben können, die direkt oder indirekt mit der Versorgungsquelle (9) verbunden ist.

13. Anlage, die eine Gondel (201, 301) nach einem der vorhergehenden Ansprüche aufweist, **dadurch gekennzeichnet, dass** sie eine Fluidversorgungsquelle (9) aufweist, die mit jeder Versorgungsleitung (19) verbunden ist.

14. Anlage nach Anspruch 13, **dadurch gekennzeichnet, dass** sie mindestens eine Steuer- und Regelvorrichtung (12) aufweist, die es ermöglicht, den von der Versorgungsquelle (9) gelieferten Fluiddurchsatz in jeder Versorgungsleitung (19) zu regeln.

15. Anlage nach Anspruch 14, **dadurch gekennzeichnet, dass** jede Steuer- und Regelvorrichtung (12) Kühleinrichtungen enthält, die das von der Versorgungsquelle (9) gelieferte Fluid kühlen können.

16. Luftfahrzeug, das mindestens eine Anlage nach einem der Ansprüche 13 bis 15 aufweist, **dadurch gekennzeichnet, dass** die Versorgungsquelle aus dem Motor (9) des Turbostrahltriebwerks besteht.

17. Luftfahrzeug nach Anspruch 16, **dadurch gekennzeichnet, dass** der Motor (9) mit dem Verteilerkreis (18, 19, 20) über mindestens einen Versorgungsarm (10) in Verbindung steht.

18. Luftfahrzeug, das mindestens eine Anlage nach einem der Ansprüche 13 bis 15 aufweist, **dadurch gekennzeichnet, dass** die Versorgungsquelle sich an Bord des Luftfahrzeugs befindet.
